(19) Europäisches Patentamt
European Patent Office
Office européen des brevets

(11) Veröffentlichungsnummer : **0 059 355**
**B1**

(12) # EUROPÄISCHE PATENTSCHRIFT

(45) Veröffentlichungstag der Patentschrift : **10.09.86**

(51) Int. Cl.⁴ : **C 09 B 62/08**, D 06 P 3/66

(21) Anmeldenummer : **82101089.9**

(22) Anmeldetag : **15.02.82**

(54) **Verwendung von Reaktivfarbstoffen zum Färben und Bedrucken von hydroxylgruppenhaltigen Fasermaterialien.**

(30) Priorität : **26.02.81 DE 3107265**

(43) Veröffentlichungstag der Anmeldung : **08.09.82 Patentblatt 82/36**

(45) Bekanntmachung des Hinweises auf die Patenterteilung : **10.09.86 Patentblatt 86/37**

(84) Benannte Vertragsstaaten : **CH DE FR GB LI**

(56) Entgegenhaltungen :
**EP-A- 0 022 209**
**DE-B- 1 146 064**
**FR-A- 2 366 405**
**GB-A- 951 667**
**GB-A- 1 027 570**

(73) Patentinhaber : **BAYER AG**
**Konzernverwaltung RP Patentabteilung**
**D-5090 Leverkusen 1 Bayerwerk (DE)**

(72) Erfinder : **Jäger, Horst, Dr.**
**Carl-Rumpff-Strasse 37**
**D-5090 Leverkusen 1 (DE)**
Erfinder : **Schündehütte, Karl Heinz, Dr.**
**Klief 75**
**D-5090 Leverkusen 3 (DE)**
Erfinder : **Kalk, Walter, Dr.**
**Klaasbruch 22**
**D-5090 Leverkusen 31 (DE)**

**EP 0 059 355 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Aus der GB-A-1 027 570 ist ein Verfahren zum Färben von Polyamiden bekannt, bei dem Farbstoffe verwendet werden, die sowohl eine kationische als auch eine faserreaktive Gruppierung besitzen.

Die DE-B-1 146 064 beschreibt die Herstellung eines Reaktivfarbstoffs durch Diazotierung von 1-Aminobenzol-2,5-disulfonsäure, Kupplung mit 1-(3'-Aminophenyl)-5-pyrazolon-3-carbonsäure, Umsetzung mit Cyanurchlorid und anschließende Kondensation mit Ethylendiamin.

Die vorliegende Erfindung betrifft die Verwendung von Farbstoffen der Formel

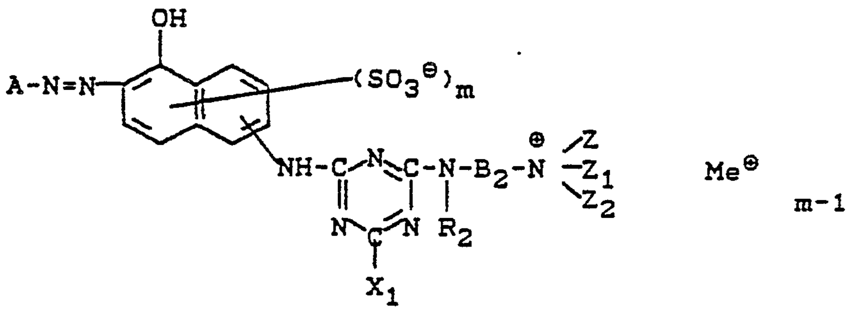

(1)

worin

A = sulfogruppenhaltiger Benzol- oder Naphthalinrest

Me = monovalentes Kation

m = 1 oder 2

$X_1$ = F, Cl

$B_2$ = zweiwertiger organischer Rest

$R_2$ = H, gegebenenfalls substituiertes Alkyl, Aryl, Aralkyl oder Heteroaryl

Z, $Z_1$, $Z_2$ = gegebenenfalls substituiertes Alkyl, Cycloalkyl, Aralkyl oder Aryl, wobei 2 oder 3 der Reste Z, $Z_1$ und $Z_2$ zusammen mit dem N-Atom einen 5- oder 6-gliedrigen Heterocyclus bilden können,

zum Färben und Bedrucken von OH-haltigen Fasermaterialien.

$Me^{\oplus}$ steht vorzugsweise für ein Alkalimetall-Kation (wie z. B. $Li^{\oplus}$, $Na^{\oplus}$, $K^{\oplus}$) oder für ein Ammoniumkation (wie z. B. $NH_4^{\oplus}$).

Die Alkylreste haben insbesondere 1-4 Kohlenstoffatome. Die Cycloalkylreste (Z, $Z_1$, $Z_2$) haben insbesondere 3 bis 7 C-Atome. Die Aralkylreste (Z, $Z_1$, $Z_2$) haben insbesondere 1-4 C-Atome im Alkylteil und der Arylteil besteht insbesondere aus Phenyl oder Naphthyl. Unter den cyclischen Resten sind hervorzuheben der Cyclopentyl-, Cyclohexyl-, Phenyl-, Naphthyl-, Benzyl- und Phenylethylrest.

Die Reste Z, $Z_1$, $Z_2$ können 1-3 Substituenten tragen wie Carboxy, Chlor, Sulfo, $C_1$-$C_4$-Alkoxy, Cyan und Hydroxy, und die cyclischen Reste können zusätzlich durch $C_1$-$C_4$-Gruppen substituiert sein.

Außerdem können 2 oder 3 der Reste Z, $Z_1$ und $Z_2$ gemeinsam mit dem N-Atom, mit dem sie verbunden sind, einen Heterocyclus mit vorzugsweise 5 oder 6 Ringgliedern bilden. Beispielsweise können die Reste Z und $Z_1$ einen Pyrrolidin-, Piperidin-, Morpholin- oder Piperazin-Ring bilden und die Reste Z, $Z_1$ und $Z_2$ einen Pyridinring.

Der Benzol- oder Naphthalinrest A kann weitere Substituenten enthalten. Als Beispiel seien genannt :

Carbonsäure- und Disulfimidgruppen, Alkylgruppen mit 1 bis 4 Kohlenstoffatomen wie Methyl, Ethyl, Propyl, Isopropyl und Butyl, Alkoxygruppen mit 1 bis 4 Kohlenstoffatomen wie Methoxy, Ethoxy, Propoxy, Isopropoxy und Butoxy, Acylaminogruppen mit 1 bis 6 Kohlenstoffatomen wie Acetylamino, Propionylamino und Benzoylamino, Halogen wie Fluor, Chlor und Brom, Nitro, Cyan, Trifluormethyl, Sulfamoyl, Carbamoyl, Ureido, Hydroxy und Reaktivgruppen wie 2,4-Dichlor-triazinyl-6-, 2-Chlor-4-methoxy-triazinyl-6, 2-Chlor-4-methoxyethoxy-triazinyl-6, 2,4-Difluor-5-chlorpyridmidinyl-6, 2-Fluor-5-chlor-6-methyl-pyrimidinyl-4, 2-Fluor-5,6-dichlor-pyrimidinyl-6, 2-Chlor-4-phenylamino-triazinyl-6, 2-Chlor-4-N-methylphenylamino-triazinyl-6, 2-Chlor-4-N-ethylphenylamino-triazinyl-6, 2-Chlor-4-(2',3'- oder 4'-sulfophenylamino)-triazinyl-6, 2-Chlor-4-amino-triazinyl-6, 2-Chlor-4-methylamino-triazinyl-6, 2,4,5-Trichlor-pyrimidinyl-6.

Die Reaktivfarbstoffe der Formel (1) werden hergestellt, indem man eine diazotierte Aminoverbindung der Formel

$$A—NH_2 \qquad (2),$$

eine Kupplungskomponente der Formel

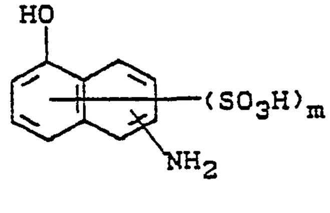

(3),

xL1,5

ein s-Triazin der Formel

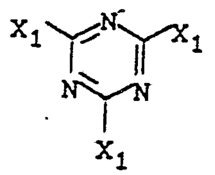

(4),

und ein Amin der Formel

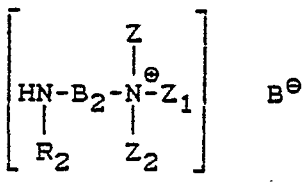

(5),

durch Kupplung und Kondensation in beliebiger Folge zu einem Reaktivfarbstoff der Formel (1) umsetzt. ($B^{\ominus}$ = monovalentes Anion, z. B. $Cl^{\ominus}$,

$$\frac{SO_4^{2-}}{2}).$$

Die wichtigsten Verfahrensvarianten zur Herstellung der Reaktivfarbstoffe der Formel (1) sind dadurch gekennzeichnet, daß man

1. eine diazotierte Aminoverbindung der Formel (2) mit einer Kupplungskomponente der Formel (3) zu einer Azoverbindung der Formel

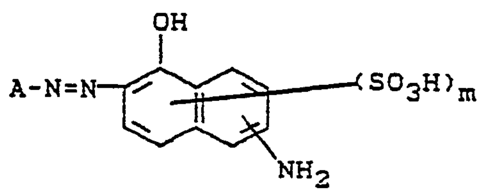

(6)

kuppelt, diese mit einem s-1,3,5-Triazin der Formel (4) kondensiert und das erhaltene primäre Kondensationsprodukt mit einem Amin der Formel (5) zu einem Reaktivfarbstoff der Formel (1) kondensiert ;

2. eine Kupplungskomponente der Formel (3) mit einem Tri-s-1,3,5-triazin der Formel (4) kondensiert, das erhaltene primäre Kondensationsprodukt mit einem Amin der Formel (5) kondensiert und das entstandene sekundäre Kondensationsprodukt mit einer diazotierten Aminoverbindung der Formel (2) zu einem Reaktivfarbstoff der Formel (1) kuppelt ;

3. eine Kupplungskomponente der Formel (3) mit einem s-1,3,5-Triazin der Formel (4) kondensiert, auf das erhaltene primäre Kondensationsprodukt eine diazotierte Aminoverbindung der Formel (2) kuppelt und die erhaltene Azoverbindung mit einem Amin der Formel (5) zu einem Reaktivfarbstoff der Formel (1) kondensiert.

Falls die fertigen Reaktivfarbstoffe der Formel (1) komplexbildende Gruppen enthalten, können sie nachträglich mit schwermetallabgebenden Mitteln umgesetzt werden.

Als Ausgangsstoffe zur Herstellung der Reaktivfarbstoffe der Formel (1) seien genannt :

a) s-Triazine der Formel (4), 2,4,6-Trifluor-s-triazin, 2,4,6-Trichlor-s-triazin ;

b) Organische Farbstoffe :

I. Monoazoverbindungen der Formel

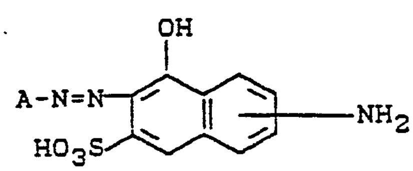

(7)

worin die —$NH_2$-Gruppe vorzugsweise an die 5-, 6-, 7- oder 8-Stellung des Naphthalinkerns gebunden ist, und welche eine Sulfonsäuregruppe in 5- oder 6-Stellung des Naphthalinkerns enthalten können und A

einen sulfonierten Phenyl- oder Naphthylrest bedeutet, insbesondere diejenigen, welche eine —$SO_3H$-Gruppe in ortho-Stellung zur Azobindung enthalten ; der Phenylrest kann weitersubstituiert sein, beispielsweise durch Halogenatome, wie Chlor, Alkylrest, wie Methyl, Acylaminogruppen, wie Acetylamino, und Alkoxyradikale wie Methoxy.

II. Disazoverbindungen der Formel (7) worin

A einen sulfogruppenhaltigen Rest der Azobenzol-, Azonaphthalin- oder Phenylazonaphthalinreihe bedeutet und der Naphthalinkern durch die —$NHR_1$-Gruppe, in der $R_1$ H oder $C_1$-$C_4$-Alkyl bezeichnet und gewünschtenfalls durch Sulfonsäure wie in Klasse I substituiert ist.

III. Mono- oder Disazoverbindungen der Formel

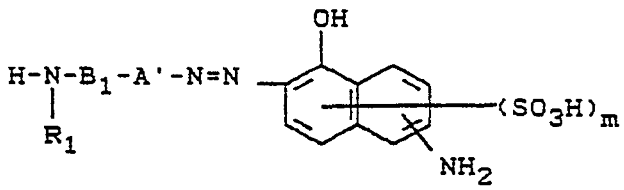

(8)

worin

A' einen sulfogruppenhaltigen Rest der Azobenzol-, Azonaphthalin- oder Phenylazonaphthalinreihe oder vorzugsweise einen sulfonierten, höchstens bicyclischen Arylenrest der Benzol- oder Naphthalinreihe bedeutet,

$B_1$ eine direkte Bindung oder ein Brückenglied,

$R_1$ Wasserstoff oder $C_1$-$C_4$-Alkyl und

m 1 oder 2 bezeichnen.

A' bedeutet vorzugsweise einen Rest der Benzolreihe, der eine Sulfonsäuregruppe enthält.

Besondere Beispiele für Verbindungen aus den oben angegebenen Verbindungsklassen (I) bis (III) sind folgende :

Für Klasse I

6-Amino-1-hydroxy-2-(2'-sulfophenylazo)-naphthalin-3-sulfonsäure, 8-Amino-1-hydroxy-2-(2'-sulfophenylazo)-naphthalin-3:6-disulfonsäure, 7-Amino-2-(2':5'-disulfophenylazo)-1-hydroxynaphthalin-3-sulfonsäure, 8-Amino-1-hydroxy-2:2'-azonaphthalin-1':3:5':6-tetrasulfonsäure, 6-Amino-1-hydroxy-2-(4'-acetylamino-2'-sulfophenylazo)-naphthalin-3-sulfonsäure, 8-Amino-1-hydroxy-2-phenylazonaphthalin-3:6-disulfonsäure, 8-Amino-1-hydroxy-2:2'-azonaphthalin-1':3:6-trisulfonsäure, 6-Amino-1-hydroxy-2-(4'-methoxy-2'-sulfophenylazo)naphthalin-3-sulfonsäure, 8-Amino-1-hydroxy-2:2'-azonaphthalin-1':3:5'-trisulfonsäure, 6-Amino-1-hydroxy-2:2'-azonaphthalin-1':3:5'-trisulfonsäure, 7-Amino-1-hydroxy-2:2'-azonaphthalin-1':3-disulfonsäure, 8-Amino-1-hydroxy-2-(4'-hydroxy-3'-carboxyphenylazo)naphthalin-3:6-disulfonsäure, 6-Amino-1-hydroxy-2-(4'-hydroxy-3'-carboxyphenylazo)naphthalin-3:5-disulfonsäure.

Für Klasse (II)

8-Amino-1-hydroxy-2-[4'-(2''-sulfophenylazo)-2'-methoxy-5'-methylphenylazo]-naphthalin-3,6-disulfonsäure, 6-Amino-1-hydroxy-2-[4'-(2''-sulfophenylazo)-2'-methoxy-5'-methylphenylazo]-naphthalin-3:5-disulfonsäure.

Besonders wichtige Azofarbstoffe, die zur Herstellung der Reaktivfarbstoffe der Formel (1) verwendet werden können, sind die Azofarbstoffe der Formeln

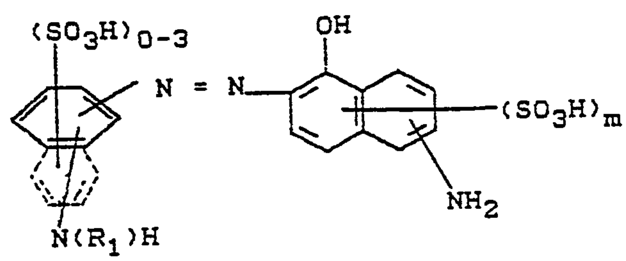

(9),

(Forsetzung)

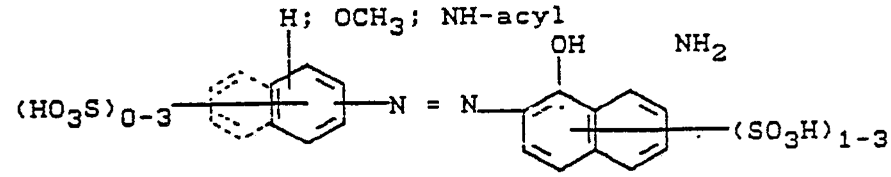

(10)

worin acyl ein niederigmolekularer, höchstens 3 Kohlenstoffatome enthaltender aliphatischer Acylrest oder ein höchstens 8 Kohlenstoffatome enthaltender aromatischer Rest ist, $R_1$ H oder $C_1$-$C_4$-Alkyl bezeichnet und m für 1 oder 2 steht.

Zur Herstellung der Reaktivfarbstoffe der Formel (1) sind insbesondere die folgenden Diazo- und Kupplungskomponenten geeignet :

Diazokomponenten :

1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-ethoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1,4-Diaminobenzol-2,5-disulfonsäure, 1-Amino-3- oder -4-nitrobenzol-6-sulfonsäure, 1-Aminonaphthalin-2-, -4-, -5-, -6-, -7- oder -8-sulfonsäure, 2-Aminonaphthalin-3,6- oder -5,7-disulfonsäure, 1-Aminonaphthalin-3,6- oder -5,7-disulfonsäure, 2-Amino-naphthalin-1,5-, -1,7-, -3,6-, -5,7-, -4,8- oder -6,8-disulfonsäure, 1-Aminonaphthalin-2,5,7- trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxynaphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure.

Kupplungskomponenten :

1-Amino-8-hydroxynaphthalin-6-sulfonsäure, 1-Amino-8-hydroxynaphthalin-2,4-disulfonsäure, 1-Amino-8-hydroxynaphthalin-2,4,6-trisulfonsäure, 2-Amino-5-hydroxynaphthalin-1,7-disulfonsäure, 2-Amino-8-hydroxynaphthalin-6-sulfonsäure, 2-Amino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure,

c) Verbindungen der Formel (5)

1-Amino-2-(trimethylammonium)-ethan-chlorid, 1-Amino-3-(trimethylammonium)-propan-chlorid, Trimethyl-(3-aminophenyl)-ammonium-chlorid, Trimethyl-(4-aminophenyl)-ammonium-chlorid, 1-Amino-2-(pyridinium)-ethan-chlorid, 1-Amino-2-(N-methyl-morpholinium)-ethan-chlorid, 1-Methyl-4-(amino-methyl)-pyridinium-methosulfat, Trimethyl-(2-aminophenyl)-ammonium-chlorid, Trimethyl-(2-amino-4-chlor-phenyl)-ammonium-chlorid, Trimethyl-(2-chlor-4-amino-phenyl)-ammonium-chlorid, Trimethyl-(2,5-dichlor-4-amino-phenyl)-ammonium-chlorid, Trimethyl-(3,5-dichlor-4-amino-phenyl)-ammonium-chlorid, Trimethyl-(3-amino-4-methyl-phenyl)-ammonium-chlorid, Trimethyl-(3-methyl-4-amino-phenyl)-ammonium-chlorid, Trimethyl-(2-methyl-3-amino-phenyl)-ammonium-chlorid, 1-Amino-2-(N-methyl-pyrrolidinium)-ethan-chlorid, 1-Amino-2-(N-methyl-piperidinium)-ethan-chlorid, 1-Amino-2-(N,N'-Dimethyl-piperazinium)-ethan-chlorid, 1-Amino-2-(2'-methyl-pyridinium)-ethan-chlorid, 1-Amino-2-(3'-methyl-pyridinium)-ethan-chlorid, 1-Amino-2-(4'-methyl-pyridinium)-ethan-chlorid.

Diese Verbindungen können nach den Angaben der Deutschen Offenlegungsschrift 2 626 495 hergestellt werden.

Bei der Herstellung der Reaktivfarbstoffe der Formel (1) erfolgt die Diazotierung der eine diazotierbare Aminogruppe enthaltenden Zwischenprodukte in der Regel durch Einwirkung salpetriger Säure in wäßrig-mineralsaurer Lösung bei tiefer Temperatur, die Kupplung bei schwach sauren, neutralen bis schwach alkalischen pH-Werten.

Die Kondensation des s-Triazins der Formel (4) mit den sulfohaltigen organischen Farbstoffen erfolgt vorzugsweise in wäßriger Lösung oder Suspension, bei niedriger Temperatur und bei schwach saurem, neutralem bis schwach alkalischen pH-Wert.

Die Farbstoffe der Formel (1) sind faserreaktiv, da sie im s-Triazinrest eine abspaltbare Gruppierung $X_1$ enthalten.

Unter faserreaktiven Verbindungen sind solche zu verstehen, die mit den Hydroxygruppen der Cellulose unter Bildung kovalenter chemischer Bindungen zu reagieren vermögen.

Die neuen Farbstoffe der Formel (1) eignen sich zum Färben und Bedrucken von Hydroxylgruppen enthaltenden Materialien zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekannt gewordenen Verfahren erfolgt.

Die angegebenen Formeln sind die der entsprechenden Salze. Die Farbstoffe wurden im allgemeinen in Form der Alkalisalze, insbesondere der Na-Salze, isoliert und zum Färben eingesetzt.

Die in den Beispielen genannten Gewichte beziehen sich auf die Konstitutionsformel oder die chemische Bezeichnung, und die Temperatur ist in Celsiusgraden angegeben.

Beispiel 1 (zur Erläuterung der Herstellung : nicht erfindungsgemäß)

24,5 g des Farbstoffs der Formel

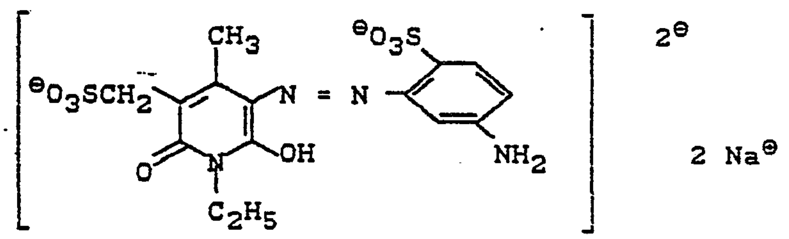

werden in 400 ml Eiswasser neutral gelöst. Diese Lösung läßt man in eine Vorlage aus 10 g Cyanurchlorid und 200 ml Eiswasser einlaufen und rührt bei 5° solange nach, bis chromatographisch kein Ausgangsmaterial mehr nachweisbar ist. Die Lösung wird geklärt und mit 2n Natriumhydroxid-Lösung auf pH 7 gestellt.

Man setzt dann 150 ml einer wäßrigen Lösung zu, die 9,5 g 1-Amino-3-(trimethylammonium)-propanchlorid

$$H_2N—(CH_2)_3—N^+(CH_3)_3Cl^- \cdot HCl$$

enthält und stellt unter ständigem Abstumpfen der freiwerdenden Salzsäure mit 2n Natriumhydroxidlösung den pH auf 9,5 und läßt dabei die Temperatur langsam auf 10° ansteigen.

Nach beendigter Reaktion wird der gebildete Reaktivfarbstoff durch Einstreuen von Natriumchlorid ausgesalzen, filtriert, gewaschen und im Vakuum getrocknet. Er stellt ein gelbes Pulver dar und färbt Baumwolle und Regeneratcellulose in klaren Gelbtönen (Farbton der Färbung auf Baumwolle gemäß Hue Indication Chart des Color Index : 1).

Farbstoffe mit ähnlichen Eigenschaften werden erhalten, wenn man die in der nachfolgenden Tabelle 1 in der Spalte 2 aufgeführten Aminofarbstoffe mit äquivalenten Teilen 2,4,6-Trichlor-1,3,5-triazin und gleich anschließend mit den in Spalte 3 genannten Aminen gemäß den Angaben des Beispiels 1 kondensiert. In der jeweils letzteren Spalte ist der Farbtonwert der Färbung gemäß Hue Indication Chart des Color Index in Klammern angegeben.

(Siehe Tabelle 1 Seite 7 f.)

Tabelle 1

| N° | Aminofarbstoff | Amin | Farbton auf Baumwolle |
|---|---|---|---|
| 1 | 1-Aminobenzol-2,5-disulfonsäure ⟶ 2-Acetylamino-5-hydroxynaphthalin-7-sulfonsäure (verseift) | Trimethyl-(3-aminophenyl)-ammonium-chlorid | orange (4) |
| 2 | 1-Aminobenzol-2-sulfonsäure ⟶ 2-Amino-5-hydroxy-naphthalin-1,7-disulfonsäure | do | do (5) |
| 3 | 2-Aminonaphthalin-1,5-disulfonsäure ⟶ 2-Acetyl-amino-5-hydroxynaphthalin-7-sulfonsäure (verseift) | do | do (6) |
| 4 | 2-Aminonaphthalin-3,6,8-trisulfonsäure ⟶ 2-Acetylamino-5-hydroxynaphthalin-7-sulfonsäure (verseift) | do | do (7) |
| 5 | 2-Aminonaphthalin-1,5,7-trisulfonsäure ⟶ 1-Acetylamino-5-hydroxynaphthalin-7-sulfonsäure (verseift) | do | do (6) |
| 6 | 1-Amino-4-methoxybenzol-2,5-disulfonsäure ⟶ 2-Amino-5-hydroxynaphthalin-7-sulfonsäure | do | scharlach (7) |
| 7 | 1-Amino-4-methoxybenzol-2-sulfonsäure ⟶ 2-Amino-5-hydroxynaphthalin-7-sulfonsäure | do | do (7) |
| 8 | 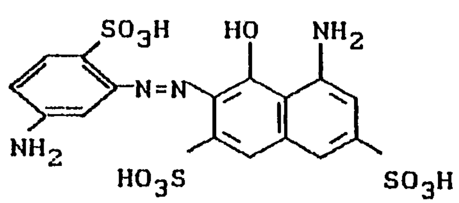 | 1-Amino-3-(trimethyl-ammonium)-propan-chlorid | rot (8) |

Beispiel 2 (nicht anspruchsgemäß: dient nur zur Erläuterung der Herstellung)

Zur neutralen Lösung von 30,5 g des Trinatriumsalzes des durch Kupplung von diazotierter 2-Aminonaphthalin-3,6,8-trisulfonsäure mit 3-Aminophenylharnstoff in essigsaurem Milieu erhaltenen Aminoazofarbstoffes in 500 ml Wasser gibt man bei 40 °C 15 g 1-(2',4'-Dichlortriazinyl-6'-amino)-3-(trimethylammonium)-propanchlorid, wobei durch ständige Zugabe von 2n Natriumhydroxidlösung ein pH-Wert von 6 bis 6,5 aufrechterhalten wird. Die Kondensation wird fortgesetzt bis chromatographisch kein Ausgangsfarbstoff mehr nachweisbar ist. Der entstandene Farbstoff der Formel

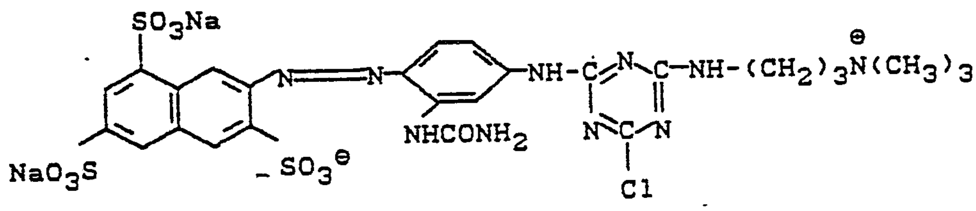

wird mit Natriumchlorid ausgesalzen, abgesaugt, gewaschen und im Vakuum getrocknet. Er färbt Cellulosematerialien in sehr echten rotstichigen Gelbtönen (Color-Index Farbtonwert: 4).

Farbstoffe von ähnlichen Eigenschaften erhält man analog der oben geschilderten Arbeitsweise durch Umsetzung der in Spalte 2 der nachfolgenden Tabelle aufgeführten Aminofarbstoffe mit den in Spalte 3 genannten primären Kondensationsprodukten aus 2,4,6-Trichlor-1,3,5-triazin und Amin.

(Siehe Tabelle 2 Seite 9 f.)

Tabelle 2

| N° | Aminofarbstoff | Amin | Farbton auf Baumwolle |
|---|---|---|---|
| 1 | 1-Aminobenzol-2,4-disulfonsäure ⟶ 2-Acetylamino-5-hydroxynaphthalin-7-sulfonsäure (verseift) | Trimethyl-(3-aminophenyl)-ammonium-chlorid | orange (4) |
| 2 | 2-Aminonaphthalin-1,5-disulfonsäure ⟶ 2-Acetylamino-5-hydroxynaphthalin-7-sulfonsäure (verseift) | do | do (6) |
| 3 | 1-Amino-methoxybenzol-2-sulfonsäure ⟶ 2-Amino-5-hydroxynaphthalin-7-sulfonsäure | do | scharlach (7) |
| 4 | 2-Aminonaphthalin-1,5-disulfonsäure ⟶ 2-Acetylamino-8-hydroxynaphthalin-6-sulfonsäure (verseift) | 1-Amino-3-(trimethylammonium)-propan-chlorid | gelbstichig rot (6) |

Beispiel 3

32 g 1-Amino-8-hydroxynaphthalin-3,6-disulfonsäure werden in 400 ml Eiswasser neutral gelöst. Diese Lösung tropft man in eine Vorlage aus 18,5 g Cyanurchlorid und rührt solange, bis keine freie 1-Amino-8-hydroxynaphthalin-3,6-disulfonsäure mehr nachweisbar ist. Dann werden 19 g Trimethyl-(3-aminophenyl)-ammoniumchlorid zugegeben. Man läßt die Temperatur auf 30 bis 35 °C steigen und hält den pH-Wert der Reaktionslösung bei 4 bis 4,5. Nach beendigter Kondensation wird das Farbstoffzwischenprodukt bei 0 bis 10 °C mit 30 g diazotierter 2-Aminonaphthalin-1,5-disulfonsäure gekuppelt. Bei einem End-pH von 6,5 bis 7 wird der Farbstoff der Formel

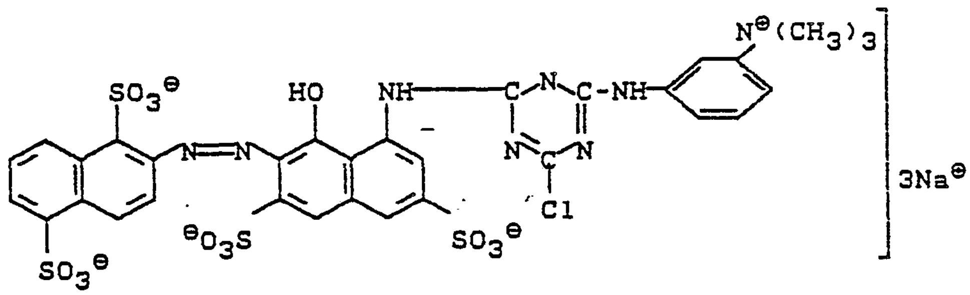

mit Natriumchlorid ausgesalzen, filtriert, gewaschen und im Vakuum getrocknet. Er stellt ein dunkelrotes Pulver dar und färbt Baumwolle und regenerierte Cellulose in blaustichigen Rottönen und guter Naß-, Reib- und Lichtechtheit (Color Index Farbtonwert : 9).

Die nachfolgende Tabelle 3 enthält weitere Farbstoffe, die durch Umsetzung von 2,4,6-Trichlor-1,3,5-triazin mit den in Spalte 2 aufgeführten Kupplungskomponenten, dann mit den in Spalte 3 genannten Aminen und zum Schluß durch Kuppeln mit den in Spalte 4 erwähnten Diazokomponenten erhalten werden.

(Siehe Tabelle 3 Seite 11 f.)

Tabelle 3

| No | Kupplungskomponente | Amin | Diazokomponente | Farbton auf Baumwolle |
|---|---|---|---|---|
| 1 | 1-Amino-8-hydroxynaphthalin-3,6-disulfonsäure | Trimethyl-(3-aminophenyl)-ammoniumchlorid | 1-Aminobenzol-2-sulfonsäure | rot (8) |
| 2 | 1-Amino-8-hydroxynaphthalin-4,6-disulfonsäure | 1-Amino-3-(trimethyl-ammonium)propanchlorid | do | do (8) |
| 3 | 1-Amino-8-hydroxynaphthalin-3,6-disulfonsäure | do | 1-Amino-4-chlorbenzol-2-sulfonsäure | do (8) |
| 4 | do | do | 1-Amino-4-methylbenzol-2-sulfonsäure | do (9) |
| 5 | do | do | 1-Aminobenzol-2,5-disulfonsäure | do (8) |
| 6 | do | do | 2-Aminonaphthalin-1-sulfonsäure | do (9) |
| 7 | 1-Amino-8-hydroxynaphthalin-4,6-disulfonsäure | do | 2-Aminonaphthalin-1,5-disulfonsäure | do (9) |
| 8 | 1-Amino-8-hydroxynaphthalin-6-sulfonsäure | | 2-Aminonaphthalin-1,5,7-trisulfonsäure | do (9) |

Beispiel 4

Eine neutrale Lösung von 32 g 1-Amino-8-hydroxynaphthalin-3,6-disulfonsäure in 200 ml Eiswasser wird in eine Vorlage aus 200 ml Eiswasser und 21 g Cyanurchlorid eingetropft. Man rührt solange bei 0-5 °C, bis keine freie 1-Amino-8-hydroxynaphthalin-3,6-disulfonsäure mehr nachweisbar ist. Anschließend setzt man die aus 17,3 g 2-Aminobenzol-1-sulfonsäure erhaltene Diazoverbindung zu und führt die Kupplung bei pH 6,0-6,5 und 0-5° aus. Man klärt vom nicht umgesetzten Cyanurchlorid und versetzt das Filtrat mit 150 ml einer Lösung, die 18,9 g 1-Amino-3-(trimethylammonium)-propanchlorid enthält und stellt unter ständigem Abstumpfen der freiwerdenden Salzsäure mit 2n Natriumhydroxidlösung auf pH 9,5 und läßt dabei die Temperatur langsam auf 10° ansteigen. Nach beendigter Reaktion wird der gebildete Reaktivfarbstoff durch Einstreuen von Kaliumchlorid ausgesalzen, filtriert und im Vakuum getrocknet. Nach dem Mahlen erhält man ein rotes Pulver, das Baumwolle und Regeneratcellulose in klaren Rottönen färbt Color-Index-Farbtonwert : 8. Der Farbstoff entspricht der Formel

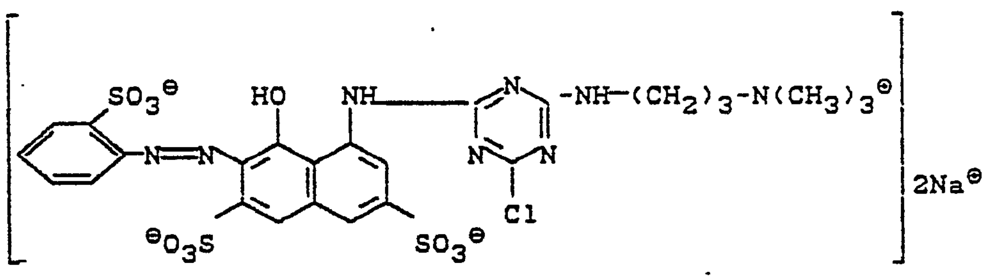

Die nachfolgende Tabelle 4 enthält weitere Farbstoffe, die durch Umsetzung von 2,4,6-Trichlor-1,3,5-triazin mit den in Spalte 2 aufgeführten Kupplungskomponenten, dann durch Kuppeln mit den in Spalte 4 erwähnten Diazokomponenten und zum Schluß durch Kondensation mit den in Spalte 3 genannten Aminen erhalten werden.

(Siehe Tabelle 4 Seite 13 f.)

Tabelle 4

| No | Kupplungskomponente | Amin | Diazokomponente | Farbton auf Baumwolle |
|---|---|---|---|---|
| 1 | 1-Amino-8-hydroxynaphthalin-3,6-disulfonsäure | 1-Amino-3-(triethylammonium)-ethanchlorid | 1-Aminobenzol-2-sulfonsäure | rot (8) |
| 2 | 1-Amino-8-hydroxynaphthalin-4,6-disulfonsäure | do | do | do (8) |
| 3 | 1-Amino-8-hydroxynaphthalin-3,6-disulfonsäure | Trimethyl-(3-aminophenyl)-ammoniumchlorid | 1-Amino-4-carboxybenzol-2-sulfonsäure | do (8) |
| 4 | do | 1-N-Methylamino-3-(trimethylammonium-propanchlorid | 1-Amino-4-methylbenzol-2-sulfonsäure | do (9) |
| 5 | do | 1-Amino-3-(trimethyl)-ammonium-propanchlorid | 1-Aminobenzol-2,5-disulfonsäure | do (8) |
| 6 | do | do | 2-Aminonaphthalin-1-sulfonsäure | do (9) |
| 7 | 1-Amino-8-hydroxynaphthalin-4,6-disulfonsäure | Trimethyl-(3-aminophenyl)-ammoniumchlorid | 2-Aminonaphthalin-1,5-disulfonsäure | do (9) |
| 8 | 1-Amino-8-hydroxynaphthalin-3,6-disulfonsäure | do | do | do (9) |

Beispiel 5

16 g 1-Amino-8-hydroxynaphthalin-3,6-disulfonsäure werden in 400 ml Wasser neutral gelöst. Man stellt die Reaktionslösung auf einen pH-Wert von 4,5 und tropft bei 0 bis 3 °C unter gutem Rühren 7,0 g 2,4,6-Trifluor-1,3,5-triazin zu. Der dabei freiwerdende Fluorwasserstoff wird durch dosierte Zugabe von 2n Natriumhydroxidlösung neutralisiert. Sobald keine freie 1-Amino-8-hydroxynaphthalin-3,6-disulfonsäure mehr nachweisbar ist, werden 9,5 g Trimethyl-(3-aminophenyl)-ammoniumchlorid in 50 ml Wasser zugegeben. Man läßt die Temperatur auf 20 bis 25 °C steigen und hält den pH-Wert der Reaktionslösung bei 4 bis 4,5. Nach beendigter Kondensation wird das Farbstoffzwischenprodukt bei 0 bis 10 °C mit 15 g diazotierter 2-Aminonaphthalin-1,5-disulfonsäure gekuppelt. Bei einem End-pH von 6,5 bis 7 wird der Farbstoff der Formel

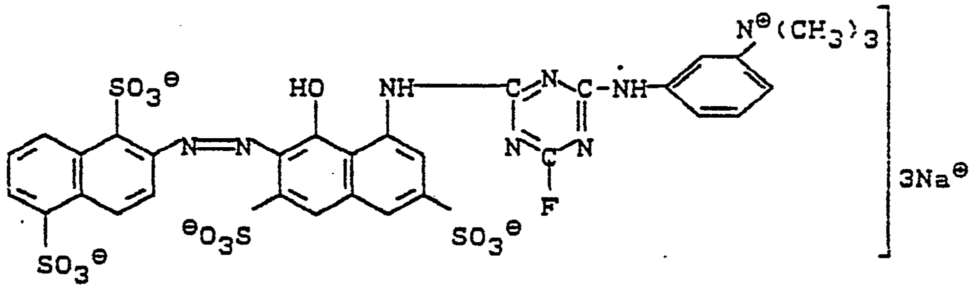

mit Natriumchlorid ausgesalzen, filtriert, gewaschen und im Vakuum getrocknet. Er stellt ein dunkelrotes Pulver dar und färbt Baumwolle und regenerierte Cellulose in blaustichigen Rottönen (Color-Index-Farbtonwert : 9) und guter Naß-, Reib- und Lichtechtheit.

Diazokomponenten, deren Kupplungsenergie ausreicht, um in einem pH-Bereich von 4 bis 5,5 zu kuppeln, können auf das primäre Kondensationsprodukt aus Kupplungskomponente und 2,4,6-Trifluor-1,3,5-triazin gekuppelt werden, worauf sich dann die Umsetzung mit dem Amin in letzter Stufe anschließt.

Die nachfolgende Tabelle 5 enthält weitere Farbstoffe, die durch Umsetzung von 2,4,6-Trifluor-1,3,5-triazin mit den in Spalte 2 aufgeführten Kupplungskomponenten, dann mit den in Spalte 3 genannten Aminen und zum Schluß durch Kuppeln mit den in Spalte 4 erwähnten Diazokomponenten erhalten werden.

(Siehe Tabelle 5 Seite 15 f.)

Tabelle 5

| No | Kupplungskomponente | Amin | Diazokomponente | Farbton auf Baumwolle |
|---|---|---|---|---|
| 1 | 1-Amino-8-hydroxynaphthalin-3,6-disulfonsäure | Trimethyl-(3-aminophenyl)-ammoniumchlorid | 1-Aminobenzol-2-sulfonsäure | rot (8) |
| 2 | 1-Amino-8-hydroxynaphthalin-4,6-disulfonsäure | 1-Amino-3-(trimethyl-ammonium)propanchlorid | do | do (8) |
| 3 | 1-Amino-8-hydroxynaphthalin-3,6-disulfonsäure | do | 1-Amino-4-chlorbenzol-2-sulfonsäure | do (8) |
| 4 | do | do | 1-Amino-4-methylbenzol-2-sulfonsäure | do (9) |
| 5 | do | do | 1-Aminobenzol-2,5-disulfonsäure | do (8) |
| 6 | do | do | 2-Aminonaphthalin-1-sulfonsäure | do (9) |
| 7 | 1-Amino-8-hydroxynaphthalin-4,6-disulfonsäure | do | 2-Aminonaphthalin-1,5-disulfonsäure | do (9) |
| 8 | 1-Amino-8-hydroxynaphthalin-6-sulfonsäure | | 2-Aminonaphthalin-1,5,7-trisulfonsäure | do (9) |

Beispiel 6 (nicht anspruchsgemäß ; dient nur zur Erläuterung der Herstellung)

24,5 g des Farbstoffes der Formel

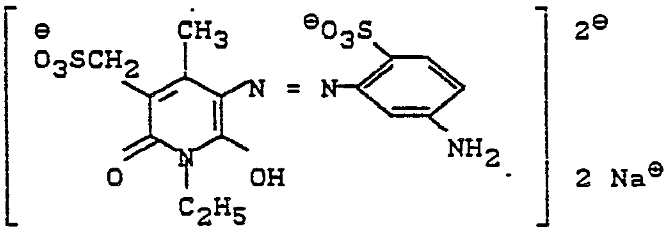

werden in 400 ml Wasser neutral gelöst. Man kühlt durch Zugabe von Eis auf 0 °C und tropft bei dieser Temperatur inert 15 Minuten 7,1 g 2,4,6-Trifluor-1,3,5-triazin zu, wobei man durch gleichzeitige Zugabe von 2n Natriumhydroxidlösung den pH der Reaktionsmischung bei 5 bis 6 hält. Sobald chromatographisch kein Ausgangsfarbstoff mehr nachweisbar ist, werden 9,5 g 1-Amino-3-trimethyl-ammoniumpropan-chlorid zugegeben. Unter ständigem Abstumpfen des freiwerdenden Fluorwasserstoffs mit 2n Natriumhydroxidlösung und Erhöhung der Temperatur auf 5 °C wird ein pH von 9 bis 9,1 eingehalten. Nach beendigter Reaktion wird der bebildete Reaktivfarbstoff durch Einstreuen von Natriumchlorid ausgesalzen, filtriert, gewaschen und im Vakuum getrocknet. Er stellt ein gelbes Pulver dar und färbt Baumwolle und Regeneratcellulose in klaren Gelbtönen. (Color-Index-Farbtonwert : 1).

Farbstoffe mit ähnlichen Eigenschaften werden erhalten, wenn man die in der nachfolgenden Tabelle 6 in der Spalte 2 aufgeführten Aminofarbstoffe mit äquivalenten Teilen 2,4,6-Trifluor-1,3,5-triazin und gleich anschließend mit den in Spalte 3 genannten Aminen gemäß den Angaben des Beispiels 9 kondensiert.

(Siehe Tabelle 6 Seite 17 f.)

Tabelle 6

| N° | Aminofarbstoff | Amin | Farbton auf Baumwolle |
|---|---|---|---|
| 1 | 1-Aminobenzol-2,5-disulfonsäure —› 2-Acetylamino-5-hydroxynaphthalin-7-sulfonsäure (verseift) | Trimethyl-(3-aminophenyl)-ammonium-chlorid | orange (4) |
| 2 | 1-Aminobenzol-2-sulfonsäure —› 2-Amino-5-hydroxy-naphthalin-1,7-disulfonsäure | do | do (5) |
| 3 | 2-Aminonaphthalin-1,5-disulfonsäure —› 2-Acetyl-amino-5-hydroxynaphthalin-7-sulfonsäure (verseift) | do | do (6) |
| 4 | 2-Aminonaphthalin-3,6,8-trisulfonsäure —› 2-Acetylamino-5-hydroxynaphthalin-7-sulfonsäure (verseift) | do | do (7) |
| 5 | 2-Aminonaphthalin-1,5,7-trisulfonsäure —› 1-Acetylamino-5-hydroxynaphthalin-7-sulfonsäure (verseift) | do | do (6) |
| 6 | 1-Amino-4-methoxybenzol-2,5-disulfonsäure —› 2-Amino-5-hydroxynaphthalin-7-sulfonsäure | do | scharlach (7) |
| 7 | 1-Amino-4-methoxybenzol-2-sulfonsäure —› 2-Amino-5-hydroxynaphthalin-7-sulfonsäure | do | do (7) |

Klotzvorschrift

30 Teile des nach Beispiel 3 dargestellten Farbstoffs werden in 1 000 Teile Wasser gelöst. Mit dieser Lösung wird ein Baumwollgewebe fouladiert und bis zu einer Gewichtsabnahme von 90 % abgepreßt. Die noch feuchte Baumwolle wird bei 70 °C während 30 Minuten in einem Bad, welches in 1 000 Teilen Wasser 200 Teile kalziniertes Natriumsulfat und 10 Teile kalziniertes Natriumcarbonat gelöst enthält, behandelt. Anschließend wird die Färbung in üblicher Weise fertiggestellt. Man erhält eine rote Färbung mit vorzüglichen Naßechtheiten.

Druckvorschrift

Wenn man Baumwollnessel mit einer Druckpaste bedruckt, die im Kilogramm 60 g des nach Beispiel 3 hergestellten Farbstoffs, 100 g Harnstoff, 300 ml Wasser, 500 g Alginatverdickung (60 g Natriumalginat/kg Verdickung) und 10 g Soda enthält und die mit Wasser auf 1 kg aufgefüllt wurde, trocknet, 8 Minuten bei 103 °C dämpft, mit heißem Wasser spült und kochend seift, so erhält man einen roten Druck von guter Naß- und Lichtechtheit.

**Patentanspruch**

Verwendung von Farbstoffen der Formel

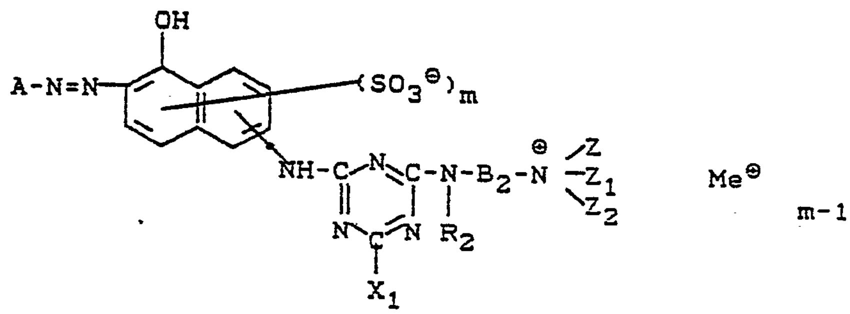

worin
A = sulfogruppenhaltiger Benzol- oder Naphthalinrest
Me = monovalentes Kation
m = 1 oder 2
$X_1$ = F, Cl
$B_2$ = zweiwertiger organischer Rest
$R_2$ = H, gegebenenfalls substituiertes Alkyl, Aryl, Aralkyl oder Heteroaryl
Z, $Z_1$, $Z_2$ = gegebenenfalls substituiertes Alkyl, Cycloalkyl, Aralkyl oder Aryl, wobei 2 oder 3 der Reste Z, $Z_1$ und $Z_2$ zusammen mit dem N-Atom einen 5- oder 6-gliedrigen Heterocyclus bilden können,
zum Färben und Bedrucken von OH-haltigen Fasermaterialien.

**Claim**

Use of dyestuffs of the formula

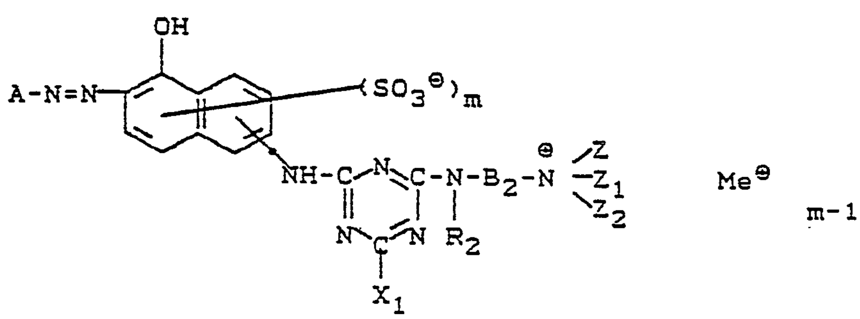

wherein
A = a sulpho-group-containing benzene or naphthalene radical,
Me = a monovalent cation,

m = 1 or 2,
$X_1$ = F or Cl,
$B_2$ = a divalent organic radical,
$R_2$ = H, optionally substituted alkyl, aryl, aralkyl or heteroaryl, and
Z, $Z_1$ and $Z_2$ = optionally substituted alkyl, cycloalkyl, aralkyl or aryl, it being possible for 2 or 3 of the radicals Z, $Z_1$ and $Z_2$, together with the N atom, to form a 5- or 6-membered heterocyclic radical, for dyeing and printing OH-containing fibre materials.

**Revendication**

Utilisation de colorants de formule

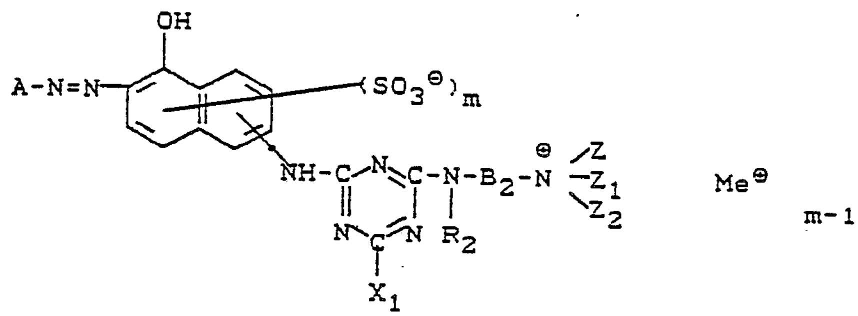

dans laquelle
A = reste de benzène ou de naphtalène portant des groupes sulfo
Me = cation monovalent
m = 1 ou 2
$X_1$ = F, Cl
$B_2$ = reste organique divalent
$R_2$ = H, groupe alkyle, aryle, aralkyle ou hétéroaryle éventuellement substitué
Z, $Z_1$, $Z_2$ = reste alkyle, cycloalkyle, aralkyle ou aryle éventuellement substitué, 2 ou 3 des restes Z, $Z_1$ et $Z_2$ pouvant former conjointement avec l'atome d'azote un hétérocycle pentagonal ou hexagonal, pour la teinture et l'impression de matières fibreuses portant des groupes OH.